# EUROPÄISCHE PATENTSCHRIFT

(11) **EP 2 008 753 B1**
(45) Veröffentlichungstag und Bekanntmachung des Hinweises auf die Patenterteilung: **24.02.2010**
(21) Anmeldenummer: 07012865.7
(22) Anmeldetag: 30.06.2007
(51) Int. Cl.: B23K 26/08, B23K 26/38, B23K 37/04

(54) **Werkzeugmaschine und Verfahren zum Bearbeiten eines Werkstückes**
Machine tool and method for machining a workpiece
Machine-outil et procédé destinés au traitement d'une pièce à usiner

(43) Veröffentlichungstag der Anmeldung: 31.12.2008
(73) Patentinhaber: TRUMPF Werkzeugmaschinen GmbH + Co. KG, 71254 Ditzingen (DE)
(72) Erfinder: Kilian, Friedrich, 71229 Leonberg (DE); Schmauder, Frank, 72555 Metzingen (DE); Pfisterer, Dieter, 71732 Tamm (DE)
(74) Vertreter: Kohler Schmid Möbus

(56) Entgegenhaltungen:
- DE-A1- 3 101 781
- JP-A- 61 283 483
- JP-A- 2002 337 032
- JP-B2- 2 921 727

## Beschreibung

Die vorliegende Erfindung betrifft eine Werkzeugmaschine zur Bearbeitung eines plattenartigen Werkstückes, insbesondere eines Bleches, unter Relativbewegung des Werkstückes und eines Bearbeitungswerkzeuges, wobei entlang ein und derselben Bewegungsachse ("gemeinsame Bewegungsachse") das Bearbeitungswerkzeug relativ zu dem Werkstück bewegbar ist. Die Erfindung betrifft weiterhin ein Verfahren zum Bearbeiten eines Werkstückes der vorstehenden Art, ein Verfahren zum Erstellen eines Bearbeitungsprogramms, sowie ein Computerprogrammprodukt mit Codemitteln zum Durchführen aller Schritte des Verfahrens zum Erstellen des Bearbeitungsprogramms.

Eine solche Werkzeugmaschine und ein zugehöriges Verfahren sind beispielsweise aus der japanischen Patentschrift Nr. 2 921 727 bekannt geworden. Dort wird eine Laserbearbeitungsmaschine beschrieben, welche einen in einer X- und Y- Richtung verfahrbaren Laserbearbeitungskopf sowie ein Werkstück, welches mittels einer Bewegungseinheit in der X- und Y-Richtung verfahren werden kann, aufweist, wobei der Bewegungsbereich des Bearbeitungskopfes geringer ist als der Bewegungsbereich des Werkstückes. Zur Bearbeitung des Werkstückes wird daher zunächst eine Laserbearbeitungsstelle des Werkstückes im Verfahrbereich des Laserbearbeitungskopfes positioniert und erst danach wird der Laserbearbeitungskopf in der X-und Y-Richtung verfahren, um das Werkstück zu bearbeiten.

Bei der oben beschriebenen Laserbearbeitungsmaschine ist die mit dem Laserbearbeitungskopf bearbeitbare Fläche auf dessen Bewegungsbereich beschränkt. Sollen größere Flächen laserbearbeitet werden, ist es erforderlich, zunächst die Laserbearbeitung einzustellen und das Werkstück zu verschieben, bevor die Bearbeitung fortgesetzt werden kann.

### Aufgabe der Erfindung

Es ist die Aufgabe der vorliegenden Erfindung, eine Werkzeugmaschine und ein Verfahren der eingangs genannten Art dahingehend weiterzubilden, dass die Bearbeitung des Werkstücks schneller und mit hoher Prozesssicherheit erfolgen kann.

### Gegenstand der Erfindung

Diese Aufgabe wird erfindungsgemäß gelöst durch eine Laserbearbeitungsmaschine gemäß Anspruch 1, bei der eine Steuerungseinheit zur Ansteuerung des Bearbeitungswerkzeuges und des Werkstücks vorgesehen ist, derart, dass wahlweise in einem ersten Bearbeitungsmodus sowohl das Bearbeitungswerkzeug als auch das Werkstück oder in einem zweiten Bearbeitungsmodus allein das Bearbeitungswerkzeug entlang der gemeinsamen Bewegungsachse bewegt wird. Im ersten Bearbeitungsmodus kann hierbei eine schnelle Bearbeitung des Werkstückes vorgenommen werden, und zwar indem das Werkstück und das Bearbeitungswerkzeug entlang der gemeinsamen Bewegungsachse bewegt werden, sodass sich am Eingriffspunkt eine kinematische Überlagerung der Bewegungen entlang der Bewegungsachse ergibt. Im zweiten Bearbeitungsmodus kann durch das Ruhen des Werkstücks die Prozess-Sicherheit erhöht werden, was insbesondere bei der Bearbeitung des Werkstücks durch ein Schneidwerkzeug von Vorteil sein kann (siehe unten). Unter einem Bearbeitungsmodus wird im Sinne dieser Anmeldung ein Betriebsmodus der Werkzeugmaschine bezeichnet, bei dem das Werkstück insbesondere durch Laserschneiden bearbeitet wird. Ein Betriebsmodus, in dem lediglich eine Positionierung des Werkstücks zur anschließenden Bearbeitung vorgenommen wird, ist von diesem Begriff nicht umfasst.

Erfindungsgemäß ist die Steuerungseinheit ausgelegt, beim Bearbeiten des Werkstückes vor dem abschließenden Freischneiden eines Werkstückausschnitts vom Werkstück vom ersten in den zweiten Bearbeitungsmodus zu wechseln. Das Freischneiden des Werkstückausschnittes vom Werkstück kann unter Ausbildung eines Schnittspaltes am Werkstück so lange im ersten Bearbeitungsmodus erfolgen, bis eine Restverbindung zwischen Werkstückausschnitt und Werkstück mit einer Länge verbleibt, bei der eine weitere Bewegung des Werkstückes eine Relativbewegung von Werkstückausschnitt und Werkstück auslösen würde. Durch die Relativbewegung kann der Werkstückausschnitt unter das Werkstück geraten und sich dort verkeilen. Weiterhin können sich durch die Relativbewegung die Breite und Form des Schnittspaltes verändern. Um dies zu vermeiden, ist die Steuerungseinheit derart ausgebildet, dass sie beim abschlie-βenden Freischneiden, d.h. ab dem Zeitpunkt, ab dem die Länge der Restverbindung zu gering ist, um die Relativbewegung zu verhindern, in den zweiten Bearbeitungsmodus umschaltet.

Bei einer vorteilhaften Weiterbildung ist eine Saugeinrichtung zum Ansaugen des Werkstücks im zweiten Bearbeitungsmodus vorgesehen. Durch das Ansaugen kann das Werkstück zusätzlich fixiert werden.

Bei einer bevorzugten Ausführungsform ist zur Bewegung des Werkstücks ein Werkstücktisch vorgesehen. Der Werkstücktisch dient hierbei als Bewegungseinheit für das Werkstück, und zwar indem dieser mit einer herkömmlichen Koordinatenführung in einer oder in zwei Richtungen relativ zu einer ortsfesten Auflage an der Werkzeugmaschine bewegbar ist. In dem Fall, dass der Werkstücktisch nur in einer Richtung bewegt wird, kann zur Bewegung des Werkstückes in einer zweiten Richtung als weitere Bewegungseinheit eine bewegbare Halteeinrichtung für das Werkstück vorgesehen sein, welche eine Relativbewegung des Werkstückes zum Werkstücktisch in der zweiten Richtung ermöglicht.

Bei einer bevorzugten Weiterbildung ist in dem Werkstücktisch eine Öffnung zur Abfuhr von abgetrennten Werkstückausschnitten vorgesehen. Durch die Öffnung können die abgetrennten Teile unter Schwerkraftwirkung rasch aus dem Arbeitsbereich der Werkzeugmaschine entfernt werden.

Vorteilhafter Weise ist die Öffnung durch mindestens eine bewegbares Element, bevorzugt eine Klappe, verschließbar. Die Klappe wird in der Regel erst geöffnet, nachdem ein auf dieser aufliegender Werkstückausschnitt vollständig freigeschnitten wurde.

Bei einer außerordentlich vorteilhaften Ausführungsform ist das Bearbeitungswerkzeug ein Laserbearbeitungskopf, welcher in der Regel über dem Werkstück angeordnet und in zumindest zwei Richtungen bewegbar ist. Der Laserbearbeitungskopf ermöglicht ein schnelles Schneiden des Bleches unter Ausbildung eines gleichmäßigen Schnittspalts.

Bevorzugt ist die Steuerungseinheit derart ausgelegt, dass wahlweise in einem dritten Bearbeitungsmodus allein das Werkstück bewegt wird. Die alleinige Bewegung des Werkstücks kann z.B. beim Erzeugen von geradlinigen Schnitten, welche eine Länge aufweisen, die über den Bewegungsbereich des Bearbeitungswerkzeugs hinausgehen, vorteilhaft sein. Auch in diesem Fall wird vor dem abschließenden Freischneiden vom dritten in den zweiten Bearbeitungsmodus umgeschaltet, um eine Werkstückbewegung beim "final cut" zu vermeiden.

Bei einer weiteren vorteilhaften Ausführungsform ist ein Bewegungsbereich des Bearbeitungswerkzeuges kleiner als ein Bewegungsbereich des Werkstückes. Der Laserbearbeitungskopf kann innerhalb seines verhältnismäßig kleinen Bewegungsbereiches Bewegungen mit hoher Beschleunigung ausführen, während das Werkstück zwar über einen größeren Bewegungsbereich verfahren werden kann, aber aufgrund seiner größeren Trägheit langsamer beschleunigt werden kann als der Laserbearbeitungskopf. Durch die überlagerte Bewegung von Bearbeitungswerkzeug und Werkstück können beide Bewegungen vorteilhaft kombiniert werden.

Die Erfindung ist auch realisiert in einem Verfahren gemäß Anspruch 8 zur Bearbeitung eines plattenartigen Werkstückes, insbesondere eines Bleches. Mit dem erfindungsgemäßen Verfahren kann eine Werkzeugmaschine derart betrieben werden, dass eine schnelle und prozesssichere Bearbeitung des Werkstückes ermöglicht wird. Es versteht sich, dass im ersten und/oder im zweiten Bearbeitungsmodus das Bearbeitungswerkzeug und/oder das Werkstück zusätzlich auch entlang einer zweiten gemeinsamen Bewegungsachse bewegt werden können, d.h. die Relativbewegung muss nicht zwangsläufig entlang einer geradlinigen Bahn erfolgen. Auch müssen die Bewegungsachse(n) nicht zwingend mit den X- bzw. Y-Achsen einer Werkzeugmaschine zusammenfallen, d.h. die gemeinsame Bewegungsachse kann insbesondere einen Winkel mit diesen Achsen einschließen.

Gemäß der Erfindung wird vor dem abschließenden Freischneiden eines Werkstückausschnittes aus dem Werkstück von dem ersten in den zweiten Bearbeitungsmodus gewechselt, wodurch eine Differenzbewegung zwischen Werkstückausschnitt und Werkstück während des abschließenden Freischneidens (final cut) vermieden werden kann.

Bei einer weiteren vorteilhaften Variante wird der Werkstückausschnitt im zweiten Bearbeitungsmodus an einer Restverbindung vom Werkstück abschließend freigeschnitten, welche nach Ausbildung eines Schnittspalts zwischen Werkstückausschnitt und Werkstück im ersten Bearbeitungsmodus verblieben ist. Das Werkstück wird hierbei so lange im ersten Bearbeitungsmodus bearbeitet, bis die Restverbindung zu kurz ist, um eine Differenzbewegung zwischen Werkstück und Werkstückausschnitt zu vermeiden.

Bei einer bevorzugten Variante wird vom ersten in den zweiten Bearbeitungsmodus gewechselt, sobald die Länge der Restverbindung 40 mm unterschreitet. Unterhalb dieser Länge lässt sich bei der Blechbearbeitung im ersten Bearbeitungsmodus, in dem das Werkstück und das Werkzeug bewegt werden, typischerweise die oben beschriebene Differenzbewegung nicht mehr vermeiden. Die Länge der Restverbindung kann jedoch je nach Typ der Werkzeugmaschine und bearbeitetem Werkstück bzw. Blech zwischen 30 und 50 mm, ja sogar zwischen 20 und 60 mm variieren.

Bei einer weiteren besonders vorteilhaften Variante wird vor dem abschließenden Freischneiden das Werkstück bevorzugt durch Ansaugen fixiert, wodurch die Prozess-Sicherheit zusätzlich erhöht wird.

Bei einer weiteren bevorzugten Variante wird der Werkstückausschnitt nach dem abschließenden Freischneiden durch Schwerkraftwirkung oder durch Ansaugen vom Werkstück abgeführt. Beide Möglichkeiten erlauben ein schnelles und sicheres Abführen der freigeschnittenen Werkstückausschnitte, wobei im Gegensatz zum manuellen Entnehmen der Ausschnitte ein kontinuierlicher Betrieb der Werkzeugmaschine gewährleistet werden kann.

Die Erfindung ist weiterhin realisiert in einem Verfahren zum Erstellen eines Bearbeitungsprogramms gemäß Anspruch 13.

Die Erfindung ist auch realisiert in einem Computerprogramm gemäß Anspruch 14. Das Bearbeitungsprogramm kann schon lange vor dem Bearbeiten des Werkstückes erstellt werden und erst unmittelbar vor dem Bearbeiten mittels eines computerlesbaren Mediums oder mittels einer anderen Form der Datenübertragung an die Steuerungseinheit übermittelt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschlie-βende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Werkzeugmaschine, und
- Fig. 2a,b: eine schematische Darstellung eines Werkstückes bei der Bearbeitung in einem ersten Bearbeitungsmodus (Fig. 2a) und in einem zweiten Bearbeitungsmodus (Fig. 2b) der Werkzeugmaschine von Fig. 1.

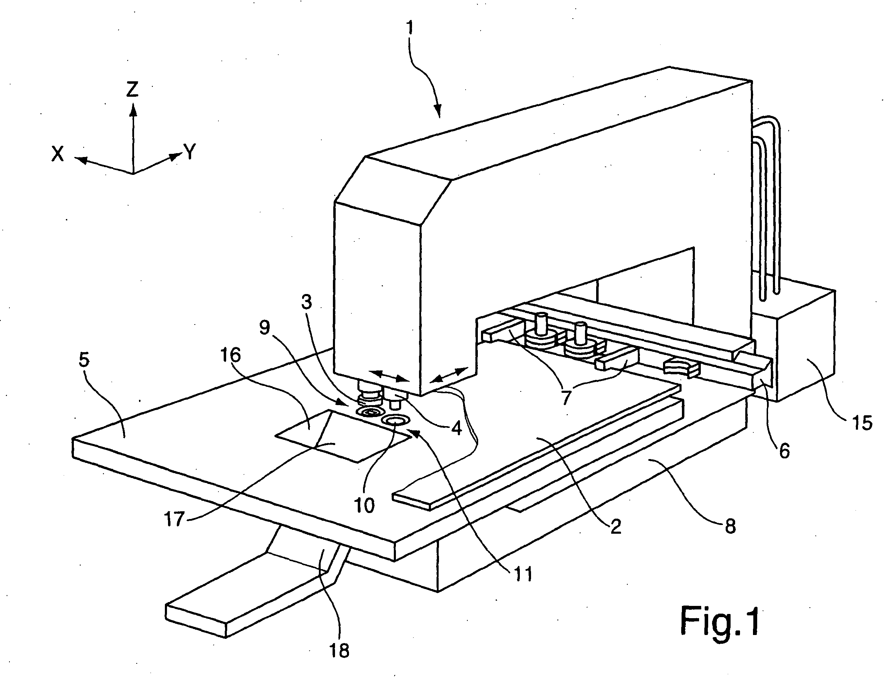

**Fig. 1** zeigt eine als Laser-Stanzpresse ausgebildete Werkzeugmaschine **1,** welche als Werkzeuge für das Bearbeiten eines als Werkstück **2** dienenden Bleches eine herkömmliche Stanz-Umformvorrichtung **3** und einen Laserbearbeitungskopf **4** als Bearbeitungswerkzeug aufweist. Das zu bearbeitende Werkstück 2 lagert während der Werkstückbearbeitung auf einem Werkstücktisch **5.** Mittels einer herkömmlichen Halteeinrichtung **6,** welche Klemmen 7 zum Festhalten des Werkstückes 2 aufweist, kann das Werkstück 2 gegenüber der ortsfesten Stanz-Umformvorrichtung 3 und dem Laserbearbeitungskopf **4** entlang einer ersten Bewegungsachse **X** der Blechebene (X-Y-Ebene eines XYZ-Koordinatensystems) verschoben werden. Entlang einer zweiten Bewegungsachse **Y** der Blechebene kann das Werkstück **2** bewegt werden, indem der Werkstücktisch 5 zusammen mit der Halteeinrichtung 6 relativ zu einer Unterlage **8,** auf welcher der Werkstücktisch 5 gelagert ist, mittels einer (nicht gezeigten) herkömmlichen Koordinatenführung verschoben wird.

Das Werkstück 2 lässt sich somit in entlang der ersten und zweiten Bewegungsachsen X, Y gegenüber der Stanz-Umformvorrichtung 3 und dem Laserbearbeitungskopf 4 verschieben, sodass der jeweils zu bearbeitende Bereich des Werkstücks 2 in einen Bearbeitungsbereich **9** der Stanz-Umformvorrichtung 3 bzw. einen durch eine im Wesentlichen kreisförmige Öffnung **10** im Werkstücktisch 5 begrenzten Bearbeitungsbereich **11** des Laserbearbeitungskopfs 4 verbracht werden kann. Im Gegensatz zur ortsfesten Stanz-Umformvorrichtung 3 ist der Laserbearbeitungskopf 4 mittels einer (nicht gezeigten) Bewegungseinheit entlang der ersten und zweiten Bewegungsachsen X, Y innerhalb des Bearbeitungsbereiches 11 verschiebbar, wie in Fig. 1 durch zwei Doppelpfeile angedeutet. Weiterhin kann der Laserbearbeitungskopf 4 auch entlang einer dritten Bewegungsachse Z verschoben werden, um eine geeignete Fokuslage für die Blechbearbeitung einzustellen.

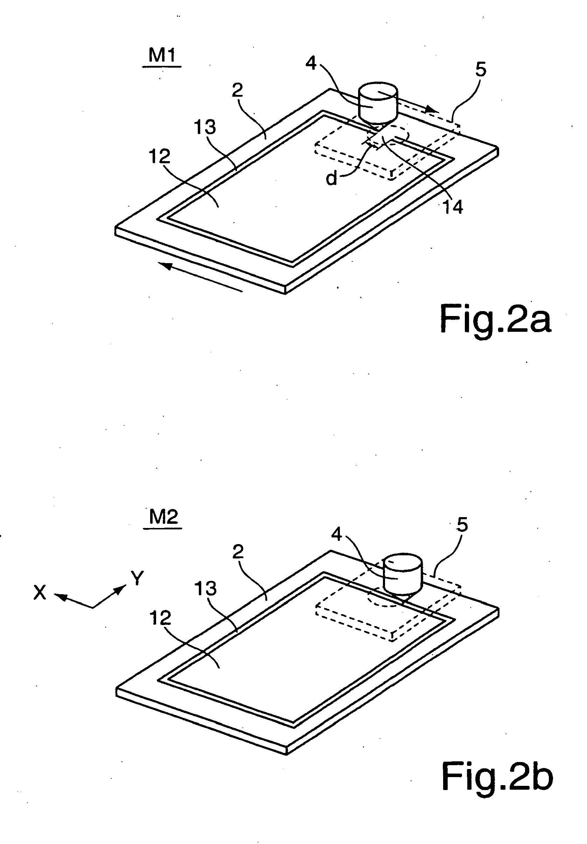

Nachdem ein zu bearbeitender Bereich des Werkstückes 2 in den Bearbeitungsbereich 11 des Laserbearbeitungskopfs 4 verbracht wurde, wird letzterer aktiviert ("Strahl ein"), um aus dem Werkstück 2 einen beispielsweise rechteckigen Werkstückausschnitt **12** abzutrennen, wie in **Fig. 2** gezeigt ist. Hierzu wird in einem ersten Bearbeitungsmodus **(M1,** Fig. 2a) der Werkzeugmaschine 1 der Werkstückausschnitt 12 teilweise freigeschnitten, wobei gleichzeitig das Werkstück 2 und der Laserbearbeitungskopf 4 unter Ausbildung eines Schnittspalts **13** verschoben werden. Kurz vor dem abschließenden Freischneiden werden hierbei der Laserbearbeitungskopf 4 und das Werkstück 2 in entgegengesetzter Richtung entlang der ersten Bewegungsachse X verschoben, wie durch die Pfeile in Fig. 2a angedeutet, wodurch das Blech 2 bis auf eine Restverbindung **14** freigeschnitten wird. Im ersten Bearbeitungsmodus M1 findet somit eine überlagerte Bewegung statt, bei der durch die gemeinsame Bewegung sowohl des Werkstückes 2 als auch des Laserbearbeitungskopfes 4 entlang der gemeinsamen, ersten Bewegungsachse X eine schnelle Bearbeitung des Bleches 2 erreicht werden kann. Es versteht sich, dass ggf. auch ein dritter Bearbeitungsmodus vorgesehen sein kann, welcher beispielsweise vor dem ersten Bearbeitungsmodus M1 ausgeführt wird, und bei dem allein das Werkstück 2 verfahren wird, während der Laserbearbeitungskopf 4 in Ruhe ist. Selbstverständlich kann für das Freischneiden eines anders als in Fig. 2a orientierten Werkstückausschnittes 12 auch eine zusätzliche Bewegung des Werkstückes 2 und/oder des Laserbearbeitungskopfes 4 entlang der zweiten Bewegungsachse Y erfolgen.

Sobald die Restverbindung 14 eine Länge d unterschreitet, die von der Größe und dem Gewicht des Werkstückausschnittes 12, des Werkstückes 2 sowie der Ausgestaltung der Bewegungseinheiten der Werkzeugmaschine 1 abhängt, besteht die Gefahr, dass sich bei der Bewegung des Werkstücks 2 der Werkstückausschnitt 12 relativ zu diesem verschiebt, insbesondere eine Drehbewegung in der Blechebene um die Restverbindung 14 ausführt. Dieses Problem verstärkt sich aufgrund der vorhandenen Reibung, wenn das Werkstück 2 wie im vorliegenden Fall entlang der ersten Bewegungsachse, d.h. relativ zum Werkstücktisch 5 bewegt wird. Daher wird in einem zweiten Bearbeitungsmodus **(M2,** vgl. Fig. 2b), der sich an den ersten Bearbeitungsmodus M1 in einem fließenden Übergang anschließt, allein der Laserbearbeitungskopf 4 bewegt, um den Werkstückausschnitt 12 bei ruhendem Werkstück 2 an der Restverbindung 14 abschließend freizuschneiden.

Die Relativbewegung zwischen Werkstückausschnitt 12 und Werkstück 2 kann im schlimmsten Fall zur Folge haben, dass der Werkstückausschnitt 12 unter das Werkstück gelangt und sich dort verkeilt und somit nicht vom Werkstück 2 abgeführt werden kann. Aber auch bei einer lediglich geringfügigen Verdrehung des Werkstückausschnitts 12 relativ zum Werkstück 2 weist der Schnittspalt 13 nach dem abschließenden Freischneiden in der Regel keine gleich bleibende Breite mehr auf. Im vorliegenden Fall, d.h. bei typischen Betriebsbedingungen, tritt die Relativbewegung zwischen Werkstückausschnitt 12 und Werkstück 2 ab einer Länge von weniger als ca. 40 mm der Restverbindung 14 auf. Diese Länge kann vom Laserbearbeitungskopf 4 problemlos allein bearbeitet werden, da dessen Bearbeitungsbereich 11 einen Durchmesser von ca. 50 mm aufweist. Es versteht sich, dass die Länge d der Restverbindung 14 je nach Anwendungsfall variieren kann, und zwar zwischen Werten von 30 und 50 mm, in Einzelfällen sogar zwischen 20 und 60 mm. Die Länge d der Restverbindung ist somit ein Parameter, welcher der Werkzeugmaschine je nach Anwendungsfall von Außen vorgegeben werden kann.

Die Steuerungseinheit 15 kann nach dem Wechsel vom ersten in den zweiten Bearbeitungsmodus weitere Maßnahmen einleiten, um das Werkstück 2 mittels nicht dargestellter Handhabungseinrichtungen zu fixieren, wie z.B. mittels eines Saugrahmens. Da das abschließende Freischneiden am ruhenden Werkstück 2 erfolgt, können die freizuschneidenden Werkstückausschnitte bereits vorher an der Handhabungseinrichtung festgelegt werden. Beispielsweise können hierbei Saugeinrichtungen eines Saugrahmens unmittelbar vor dem abschließenden Trennschneiden an den freizuschneidenden Werkstückausschnitt angelegt werden, sodass auch eine prozesssichere Entnahme aus der Werkzeugmaschine 1 sichergestellt ist.

Zur Auswahl des geeigneten Bearbeitungsmodus weist die Werkzeugmaschine 1 eine Steuerungseinheit **15** auf, die in Fig. 1 gezeigt ist. Die Steuerungseinheit 15 dient zur numerischen Steuerung der Werkzeugmaschine durch Abarbeitung eines Bearbeitungsprogramms. Das Bearbeitungsprogramm kann vorher von einem Benutzer auf einer speziell hierfür eingerichteten Datenverarbeitungsanlage erstellt werden, indem der Benutzer alle relevanten Größen, insbesondere die Anzahl und Geometrie der aus dem Werkstück 2 freizuschneidenden Werkstückausschnitte 12 über eine Benutzerschnittstelle der Datenverarbeitungsanlage zur Verfügung stellt. Ein auf der Datenverarbeitungsanlage ablaufendes Computerprogramm erstellt aus diesen Vorgaben das Bearbeitungsprogramm, welches im Wesentlichen aus einer Abfolge von Steuerungsbefehlen zum Koordinieren der Bewegungen von nicht dargestellten Bewegungseinheiten des Laserbearbeitungskopfes 4 sowie der Koordinatenführung des Werkstücktisches 5 bzw. der Halteeinrichtung 6 besteht, mit denen die Steuerungseinheit 15 verbunden ist.

Zum Wechseln vom ersten Bearbeitungsmodus M1 in den zweiten Bearbeitungsmodus M2 wird beim Erstellen des Bearbeitungsprogramms ein einzelner Steuerungsbefehl, z.B. "MODUS Slave", erzeugt, wodurch die Steuerungseinheit 15 nachfolgende, eine Zielposition vorgebende Steuerungsbefehle ausschließlich durch Bewegen des Laserbearbeitungskopfes 4 ausführt. Nachdem das abschließende Freischneiden beendet ist, wird ein im Bearbeitungsprogramm nachfolgender Steuerungsbefehl ("Strahl aus") zum Deaktivieren des Laserbearbeitungskopfes 4 ausgeführt. Durch das Abschalten des Laserstrahls wird vom zweiten Bearbeitungsmodus M2 in einen Betriebsmodus der Werkzeugmaschine 1 gewechselt, in dem das Werkstück 2 mit einem weiteren zu bearbeitenden Bereich im Bearbeitungsbereich 9 der Stanz-Umformeinrichtung 3 oder im Bearbeitungsbereich 11 des Laserbearbeitungskopfes 4 positioniert wird, wozu allein das Werkstück 4 bewegt wird ("MODUS Master"). Während der Bearbeitung des Werkstücks 2 durch die Stanz-Umformeinrichtung 3 verbleibt dieses in der durch die Positionierung festgelegten Lage. Für das Laser-Bearbeiten des Werkstückes 2 wird nach dem Positionieren der Laserbearbeitungskopf 4 erneut aktiviert, wodurch von dem Betriebsmodus zum Positionieren des Werkstückes 2 in einen Bearbeitungsmodus gewechselt wird. Unmittelbar vor oder nach dem Aktivieren des Laserbearbeitungskopfes 4 wird ein weiterer einzelner Steuerungsbefehl des Bearbeitungsprogramms ausgeführt, z.B. "MODUS Master/Slave", wodurch die Steuerungseinheit nachfolgende, eine Zielposition vorgebende Steuerungsbefehle durch Bewegen sowohl des Laserbearbeitungskopfes 4 als auch des Werkstückes 2 ausführt. Die Werkzeugmaschine 1 wird somit wieder im ersten Bearbeitungsmodus M1 betrieben und der oben geschilderte Bearbeitungsvorgang kann an einem anderen Bereich des Werkstückes 2 von neuem beginnen.

Zur Abfuhr der Werkstückausschnitte vom Werkstück 2 nach dem abschließenden Freischneiden ist im Werkstücktisch 5 eine rechteckige Öffnung **16** vorgesehen, welche durch eine bewegbare Klappe **17** öffen- und schließbar ist, die in Fig. 1 im geöffneten Zustand gezeigt ist. Das Werkstück 2 wird vor dem abschließenden Freischneiden hierbei derart positioniert, dass der teilweise freigeschnittene Werkstückausschnitt 12 von Fig. 2 über der mit der Klappe 17 verschlossenen Öffnung 16 zu liegen kommt. Nach dem abschließenden Freischneiden wird die Klappe 17 geöffnet und der vollständig freigeschnittene Werkstückausschnitt 12 fällt unter Schwerkraftwirkung durch die Öffnung 17 auf eine Rutsche **18,** von wo aus er aus dem Arbeitsbereich der Werkzeugmaschine 1 abgeführt wird.

Alternativ zum Ausschleusen über die Rutsche 18 können die Werkstückausschnitte auch - wie oben dargestellt - mittels eines Saugrahmens abgeführt werden. Weiterhin können beim Freischneiden anfallende Abfallteile geringer Größe auch über die kreisförmige Öffnung 10, welche den Bearbeitungsbereich 11 des Laserbearbeitungskopfs 4 begrenzt, ausgeschleust werden.

Zusammengefasst kann mittels der oben beschriebenen Werkzeugmaschine und des zugehörigen Verfahrens im ersten Bearbeitungsmodus die Werkstückbearbeitung zügig durchgeführt werden, wobei durch das rechtzeitige Umschalten auf den zweiten Bearbeitungsmodus gleichzeitig eine hohe Prozess-Sicherheit gewährleistet werden kann. Es versteht sich, dass neben der hier gezeigten Werkzeugmaschine, bei der sowohl das Werkstück als auch das Bearbeitungswerkzeug entlang von zwei Bewegungsachsen bewegbar sind, die obige Vorgehensweise auch an Werkzeugmaschinen vorteilhaft eingesetzt werden kann, bei denen nur in einer Richtung eine überlagerte Bewegung von Werkstück und Bearbeitungswerkzeug erfolgt. Weiterhin kann es vorteilhaft sein, zwei oder mehr Werkstückausschnitte derart teilweise aus dem Werkstück freizuschneiden, dass diese mittels eines einzigen Bearbeitungsschritts im zweiten Bearbeitungsmodus gemeinsam abschließend freigeschnitten werden können.

## Patentansprüche

1. Laserbearbeitungsmaschine (1) zur Bearbeitung eines plattenartigen Werkstückes (2), insbesondere eines Bleches, unter Relativbewegung des Werkstückes (2) und eines Bearbeitungswerkzeuges (4) in Form eines Laserbearbeitungskopfes, wobei entlang ein und derselben Bewegungsachse ("gemeinsame Bewegungsachse") das Bearbeitungswerkzeug (4) relativ zu dem Werkstück (2) und das Werkstück (2) relativ zu dem Bearbeitungswerkzeug (4) bewegbar ist,
**gekennzeichnet durch**
eine Steuerungseinheit (15) zur Ansteuerung des Bearbeitungswerkzeuges (4) und des Werkstückes (2) derart, dass wahlweise in einem ersten Bearbeitungsmodus (M1) sowohl das Bearbeitungswerkzeug (4) als auch das Werkstück (2) oder in einem zweiten Bearbeitungsmodus (M2) allein das Bearbeitungswerkzeug (4) entlang der gemeinsamen Bewegungsachse (X) bewegt wird, wobei die Steuerungseinheit (15) programmiert ist, beim Schneiden des Werkstückes (2) vor dem abschließenden Freischneiden eines Werkstückausschnitts (12) vom Werkstück (2) vom ersten Bearbeitungsmodus (M1) in den zweiten Bearbeitungsmodus (M2) zu wechseln.

2. Laserbearbeitungsmaschine nach Anspruch 1, bei der eine Saugeinrichtung zum Ansaugen des Werkstückes (2) im zweiten Bearbeitungsmodus (M2) vorgesehen ist.

3. Laserbearbeitungsmaschine nach einem der vorhergehenden Ansprüche, bei der zur Bewegung des Werkstückes (2) ein Werkstücktisch (5) vorgesehen ist.

4. Laserbearbeitungsmaschine nach Anspruch 3, bei der in dem Werkstücktisch (5) mindestens eine Öffnung (10, 16) zur Abfuhr von abgetrennten Werkstückausschnitten (12) vorgesehen ist.

5. Laserbearbeitungsmaschine nach Anspruch 4, bei der die Öffnung (16) durch mindestens ein bewegbares Element, bevorzugt eine Klappe (17), verschließbar ist.

6. Laserbearbeitungsmaschine nach einem der vorhergehenden Ansprüche, bei der die Steuerungseinheit (15) derart ausgelegt ist, dass wahlweise in einem dritten Bearbeitungsmodus allein das Werkstück (2) bewegt wird.

7. Laserbearbeitungsmaschine nach einem der vorhergehenden Ansprüche, bei der ein Bewegungsbereich (11) des Bearbeitungswerkzeuges (4) kleiner ist als ein Bewegungsbereich des Werkstückes (2).

8. Verfahren zum Schneiden eines plattenartigen Werkstückes (2), insbesondere eines Bleches, unter Relativbewegung des Werkstückes (2) und eines Bearbeitungswerkzeuges (4) in Form eines Laserbearbeitungskopfes, wobei entlang ein und derselben Bewegungsachse ("gemeinsame Bewegungsachse") das Bearbeitungswerkzeug (4) relativ zu dem Werkstück (2) und das Werkstück (2) relativ zu dem Bearbeitungswerkzeug (4) bewegbar ist,
**dadurch gekennzeichnet, dass**
das Bearbeitungswerkzeug (4) und das Werkstück (2) derart angesteuert werden, dass die Bearbeitung des Werkstückes (2) wahlweise in einem ersten Bearbeitungsmodus (M1), bei dem sowohl das Bearbeitungswerkzeug (4) als auch das Werkstück (2) entlang der gemeinsamen Bewegungsachse (X) bewegt werden, oder in einem zweiten Bearbeitungsmodus (M2), bei dem allein das Bearbeitungswerkzeug (4) entlang der gemeinsamen Bewegungsachse (X) bewegt wird, erfolgt, wobei vor dem abschließenden Freischneiden eines Werkstückausschnittes (12) aus dem Werkstück (2) von dem ersten Bearbeitungsmodus (M1) in den zweiten Bearbeitungsmodus (M2) gewechselt wird.

9. Verfahren nach Anspruch 8, bei dem der Werkstückausschnitt (12) im zweiten Bearbeitungsmodus (M2) an einer Restverbindung (14) vom Werkstück (2) abschließend freigeschnitten wird, welche bei einem teilweisen Freischneiden unter Ausbildung eines Schnittspaltes (13) zwischen dem Werkstückausschnitt (12) und dem Werkstück (2) im ersten Bearbeitungsmodus (M1) verblieben ist.

10. Verfahren nach Anspruch 9, bei dem vom ersten Bearbeitungsmodus (M1) in den zweiten Bearbeitungsmodus (M2) gewechselt wird, sobald die Länge der Restverbindung (14) 40 mm unterschreitet.

11. Verfahren nach einem der Ansprüche 8 bis 10, bei dem vor dem abschließenden Freischneiden das Werkstück (2) bevorzugt durch Ansaugen fixiert wird.

12. Verfahren nach einem der Ansprüche 8 bis 11, bei dem der Werkstückausschnitt (12) nach dem abschließenden Freischneiden durch Schwerkraftwirkung oder durch Ansaugen vom Werkstück (2) abgeführt wird.

13. Verfahren zum Erstellen eines Bearbeitungsprogramms zum Betreiben der Steuerungseinheit (15) der Laserbearbeitungsmaschine nach einem der Ansprüche 1 bis 7,
**dadurch gekennzeichnet, dass**
Steuerungsbefehle erzeugt werden, welche beim Ablauf des Bearbeitungsprogramms auf der Steuerungseinheit (15) ein Wechseln vom ersten Bearbeitungsmodus (M1) in den zweiten Bearbeitungsmodus (M2) bewirken, wobei zum Bewirken des Wechselns vom ersten Bearbeitungsmodus (M1) in den zweiten Bearbeitungsmodus (M2) ein einzelner Steuerungsbefehl erzeugt wird, welcher in eine Abfolge von Steuerungsbefehlen des Bearbeitungsprogramms eingefügt wird, und
wobei der einzelne Steuerungsbefehl in die Abfolge von Steuerungsbefehlen vor einem Steuerungsbefehl zum abschließenden Freischneiden eines Werkstückausschnitts vom Werkstück eingefügt wird.

14. Computerprogrammprodukt, welches Codemittel aufweist, die zum Durchführen aller Schritte des Verfahrens zum Erstellen eines Bearbeitungsprogramms nach Anspruch 13 angepasst sind, wenn das Programm auf einer Datenverarbeitungsanlage abläuft.

## Claims

1. Laser processing tool (1) for processing a plate-like workpiece (2), especially a metal sheet, with relative movement of the workpiece (2) and a processing tool (4) in the form of a laser processing head, the processing tool (4) being movable relative to the workpiece (2) and the workpiece (2) being movable relative to the processing tool (4) along one and the same movement axis ("common movement axis"),
**characterised by**
a control unit (15) for actuating the processing tool (4) and the workpiece (2) in such a manner that selectively, in a first processing mode (M1), both the processing tool (4) and the workpiece (2) are moved along the common movement axis (X) or, in a second processing mode (M2), the processing tool (4) alone is moved along the common movement axis (X), wherein the control unit (15) is programmed to switch during processing of the workpiece (2) from the first processing mode (M1) to the second processing mode (M2) before the final cutting-free of a workpiece cut-out (12) from the workpiece (2).

2. Laser processing tool according to claim 1, wherein a suction device is provided for applying suction to the workpiece (2) in the second processing mode (M2).

3. Laser processing tool according to any one of the preceding claims, wherein a workpiece table (5) is provided for movement of the workpiece (2).

4. Laser processing tool according to claim 3, wherein at least one aperture (10, 16) for the removal of cut-off workpiece cut-outs (12) is provided in the workpiece table (5).

5. Laser processing tool according to claim 4, wherein the aperture (16) is closable by at least one movable element, preferably a flap (17).

6. Laser processing tool according to any one of the preceding claims, wherein the control unit (15) is configured in such a manner that, selectively, in a third processing mode the workpiece (2) alone is moved.

7. Laser processing tool according to any one of the preceding claims, wherein a movement region (11) of the processing tool (4) is smaller than a movement region of the workpiece (2).

8. Method for cutting a plate-like workpiece (2), especially a metal sheet, with relative movement of the workpiece (2) and a processing tool (4) in the form of a laser processing head, the processing tool (4) being movable relative to the workpiece (2) and the workpiece (2) being movable relative to the processing tool (4) along one and the same movement axis ("common movement axis"),
**characterised in that**
the processing tool (4) and the workpiece (2) are actuated in such a manner that the processing of the workpiece (2) takes place selectively in a first processing mode (M1), in which both the processing tool (4) and the workpiece (2) are moved along the common movement axis (X), or in a second processing mode (M2), in which the processing tool (4) alone is moved along the common movement axis (X), wherein before the final cutting-free of a workpiece cut-out (12) from the workpiece (2), a switch is made from the first processing mode (M1) to the second processing mode (M2).

9. Method according to claim 8, wherein the workpiece cut-out (12) is finally cut free from the workpiece (2) in the second processing mode (M2) at a residual connection (14) which has been left during partial cutting-free, with the formation of a cut slit (13) between the workpiece cut-out (12) and the workpiece (2), in the first processing mode (M1).

10. Method according to claim 9, wherein a switch is made from the first processing mode (M1) to the second processing mode (M2) as soon as the length of the residual connection (14) becomes less than 40 mm.

11. Method according to any one of claims 8 to 10, wherein, before the final cutting-free operation, the workpiece (2) is fixed in position, preferably by the application of suction.

12. Method according to any one of claims 8 to 11, wherein, after the final cutting-free operation, the workpiece cut-out (12) is removed from the workpiece (2) by gravity or by the application of suction.

13. Method for creating a processing program for operating the control unit (15) of the laser processing tool according to any one of claims 1 to 7,
**characterised in that**
control commands are generated which, during running of the processing program on the control unit (15), bring about a switch from the first processing mode (M1) to the second processing mode (M2), wherein to bring about the switch from the first processing mode (M1) to the second processing mode (M2) a particular control command is generated which is inserted into a sequence of control commands of the processing program, and
wherein the particular control command is inserted into the sequence of control commands before a control command for final cutting-free of a workpiece cut-out from the workpiece.

14. A computer program product which has code means adapted to perform all steps of the method for creating a processing program according to claim 13 when the program is running on a data-processing system.

## Revendications

1. Machine d'usinage par laser (1) pour usiner une pièce (2) en forme de plaque, en particulier une tôle, par déplacement relatif de la pièce (2) et d'un outil d'usinage (4) sous la forme d'une tête d'usinage par laser, l'outil d'usinage (4) étant déplaçable par rapport à la pièce (2) et la pièce (2) par rapport à l'outil d'usinage (4) suivant un seul et même axe de déplacement (« axe de déplacement commun »),
**caractérisée par**
une unité de commande (15) pour commander l'outil d'usinage (4) et la pièce (2) de manière qu'au choix, dans un premier mode d'usinage (M1), aussi bien l'outil d'usinage (4) que la pièce (2) ou, dans un deuxième mode d'usinage (M2), seulement l'outil d'usinage (4) soi(en)t déplacé(s) suivant l'axe de déplacement commun (X), l'unité de commande (15) étant programmée pour, lors de la coupe de la pièce (2), avant la libération finale d'une découpe de pièce (12) de la pièce (2), passer du premier mode d'usinage (M1) dans le deuxième mode d'usinage (M2).

2. Machine d'usinage par laser selon la revendication 1, dans laquelle un dispositif d'aspiration est prévu pour aspirer la pièce (2) dans le deuxième mode d'usinage (M2).

3. Machine d'usinage par laser selon une des revendications précédentes, dans laquelle une table porte-pièce (5) est prévue pour déplacer la pièce (2).

4. Machine d'usinage par laser selon la revendication 3, dans laquelle au moins une ouverture (10, 16) pour évacuer les découpes de pièce (12) détachées est prévue dans la table porte-pièce (5).

5. Machine d'usinage par laser selon la revendication 4, dans laquelle l'ouverture (16) peut être fermée par au moins un élément mobile, de préférence un volet (17).

6. Machine d'usinage par laser selon une des revendications précédentes, dans laquelle l'unité de commande (15) est conçue de manière que, au choix, dans un troisième mode d'usinage, seule la pièce (2) soit déplacée.

7. Machine d'usinage par laser selon une des revendications précédentes, dans laquelle une plage de déplacement (11) de l'outil d'usinage (4) est plus petite qu'une plage de déplacement de la pièce (2).

8. Procédé pour couper une pièce (2) en forme de plaque, en particulier une tôle, par déplacement relatif de la pièce (2) et d'un outil d'usinage (4) sous la forme d'une tête d'usinage par laser, l'outil d'usinage (4) étant déplaçable par rapport à la pièce (2) et la pièce (2) par rapport à l'outil d'usinage (4) suivant un seul et même axe de déplacement (« axe de déplacement commun »),
**caractérisé en ce que**
l'outil d'usinage (4) et la pièce (2) sont commandés de manière que l'usinage de la pièce (2) soit effectué au choix dans un premier mode d'usinage (M1) dans lequel aussi bien l'outil d'usinage (4) que la pièce (2) sont déplacés suivant l'axe de déplacement commun (X) ou dans un deuxième mode d'usinage (M2) dans lequel seulement l'outil d'usinage (4) est déplacé suivant l'axe de déplacement commun (X), un passage du premier mode d'usinage (M1) dans le deuxième mode d'usinage (M2) ayant lieu avant la libération finale d'une découpe de pièce (12) de la pièce (2).

9. Procédé selon la revendication 8, dans lequel, dans le deuxième mode d'usinage (M2), la découpe de pièce (12) est finalement libérée de la pièce (2) au niveau d'une liaison résiduelle (14), laquelle est restée après une libération partielle par formation d'une fente de coupe (13) entre la découpe de pièce (12) et la pièce (2) dans le premier mode d'usinage (M1).

10. Procédé selon la revendication 9, dans lequel il y a passage du premier mode d'usinage (M1) dans le deuxième mode d'usinage (M2) dès que la longueur de la liaison résiduelle (14) devient inférieure à 40 mm.

11. Procédé selon une des revendications 8 à 10, dans lequel la pièce (2) est immobilisée, de préférence par aspiration, avant la libération finale.

12. Procédé selon une des revendications 8 à 11, dans lequel, après la libération finale, la découpe de pièce (12) est évacuée de la pièce (2) par gravité ou par aspiration.

13. Procédé pour écrire un programme d'usinage pour faire fonctionner l'unité de commande (15) de la machine d'usinage par laser selon une des revendications 1 à 7,
**caractérisé en ce que**
sont générées des instructions de commande qui, lors de l'exécution du programme d'usinage sur l'unité de commande (15), provoquent un passage du premier mode d'usinage (M1) dans le deuxième mode d'usinage (M2), une seule instruction de commande, qui est intégrée dans une suite d'instructions de commande du programme d'usinage, étant générée pour provoquer le passage du premier mode d'usinage (M1) dans le deuxième mode d'usinage (M2), et
ladite une seule instruction de commande étant intégrée dans la suite d'instructions de commande du programme d'usinage avant une instruction de commande pour la libération finale d'une découpe de pièce de la pièce.

14. Programme d'ordinateur qui présente des moyens de codage qui sont adaptés pour exécuter toutes les étapes du procédé pour écrire un programme d'usinage selon la revendication 13 quand le programme s'exécute sur une installation de traitement de données.
